# EUROPÄISCHE PATENTSCHRIFT

(11) **EP 0 402 826 B1**
(45) Veröffentlichungstag und Bekanntmachung des Hinweises auf die Patenterteilung: **07.09.1994**
(21) Anmeldenummer: 90110990.0
(22) Anmeldetag: 11.06.1990
(51) Int. Cl.: C08L 23/08, C08L 3/02, C08L 5/00, C08K 5/15, A01N 25/10

(54) **Verfahren zur Herstellung von mit nichtfaserigen Kohlehydraten gefüllten Ethylen-Copolymeren und ihre Verwendung**
Process for the preparation of ethylene copolymers filled with non-fibrous carbohydrates
Procédé pour la préparation de copolymères d'éthylène chargés d'hydrates de carbone non-fibreux

(30) Priorität: 16.06.1989 DE 3919659
(43) Veröffentlichungstag der Anmeldung: 19.12.1990
(73) Patentinhaber: BASF Aktiengesellschaft, 67063 Ludwigshafen (DE)
(72) Erfinder: Klimesch, Roger, Dr., D-6146 Alsbach-Haehnlein (DE); Koehler, Gernot, Dr., D-6520 Worms 1 (DE); Schlemmer, Lothar, D-6701 Maxdorf (DE)

(56) Entgegenhaltungen:
- EP-A- 0 032 802
- EP-A- 0 327 505
- DE-A- 2 313 866
- FR-A- 2 617 857
- INDUSTRIAL AND ENGINEERING CHEMISTRY RESEARCH, Band 26, 1987, Seiten 1659-1663, American Chemical Society, Washington, DC, US; F.H. OTEY et al.: "Starch-based blown films. 2"

## Beschreibung

Die Erfindung betrifft ein Verfahren zur Herstellung von mit nichtfasrigen Kohlehydraten gefüllten polaren Ethylencopolymeren, deren Verrottungsgeschwindigkeit durch die Zusammensetzung nach Belieben eingestellt werden kann, sowie deren Verwendung.

Gemäß DE-A-23 22 440 wird eine Mischung von Homopolyethylen und Stärke durch Mischen in der Wärme zu einer Grundmasse verarbeitet, die anschließend kalt mit Homopolyethylen vermischt und dann Spritzgegossen wird. Das Verfahren ist mehrstufig und damit aufwendig, außerdem bedarf es aufgrund der mangelnden Affinität zwischen Homopolyethylen und Stärke einer intensiven Durchmischung, die längere Zeit bei erhöhter Temperatur beansprucht, wobei die Stärke thermisch geschädigt werden kann.

US 4 133 784 beschreibt die Herstellung von Gemischen aus wasserdispergierbaren Ethylen-Acrylsäure-Copolymeren und Stärke. Dabei wird zunächst die Stärke mit Wasser verkleistert und anschließend das Copolymere zugemischt. Dann wird durch wiederholtes Extrudieren das Wasser weitgehend entfernt. Auch dieses Verfahren ist mehrstufig und daher aufwendig.

Gemäß US 4 337 181 wird ähnlich gearbeitet, wobei die Carboxylgruppen der einpolymerisierten Acrylsäure zu mindestens 50 Gew.% durch Ammoniak oder Amine neutralisiert werden.

Auch gemäß US 4 454 268 wird ähnlich gearbeitet, wobei die Carboxylgruppen der einpolymerisierten Acrylsäure vollständig durch starke Alkalien neutralisiert werden.

Gemäß US 4 016 117, 4 218 350, 4 324 709 und 4 021 388 werden u.a. Homopolyolefine mit Stärke und einem Zusatzstoff, der an der Luft ein Peroxid bildet, zu biologisch abbaubaren Massen verarbeitet. Nachteil dieser Massen ist, daß sie direkt nach der Herstellung mit dem Abbau beginnen.

JP-A-62 215 647 erwähnt im theoretischen Teil die Möglichkeit eines Zusatzes von u.a. Stärkederivaten zu Ethylencopolymerisaten, die vollständig neutralisierte Carboxylgruppen enthalten und daher wasserdispergierbar sind, zur Herstellung von unter Wasser im Fall einer Beschädigung selbstabdichtenden Kabelummantelungen.

Der Erfindung lag die Aufgabe zugrunde, Gin Verfahren zur Herstellung von Polymermassen zu entwickeln, die im Gebrauch stabil sind und erst auf der Mülldeponie oder im Boden verrotten, und die als Träger und Kohlenstoffquellen für Bakterienkulturen geeignet sind.

Aus der DE-A 2 313 866 ist ein biologisch aufspaltbarer Harzpreßling bekannt, der nur maximal 10 Gew.-% leicht assimilierbare organische Substanzen, jedoch 40 bis 90 Gew.-% anorganische Füllstoffe enthält.

Die FR-A 2 617 857 beschreibt eine Zusammensetzung aus einem Ethylenpolymerisat und einem biologisch abbaubaren Füllstoff, wobei die Herstellung einer derartigen Zusammensetzung durch einfaches Vermischen, aber nicht durch Extrusion erfolgt.

Demgemäß wurde ein Verfahren zur Herstellung von mit 20 bis 90 Gew.-% eines nichtfasrigen Kohlehydrates gefüllten polaren Ethylencopolymeren gefunden, welches dadurch gekennzeichnet ist, daß dabei kein Wasser zugesetzt und ein polares Ethylencopolymeres eingesetzt wird, daß ohne Hilfsmittel in Wasser nicht dispergierbar ist und die Mischung der Komponenten extrudiert wird.

Neben 50 bis 95, vorzugsweise 65 bis 95 Gew.% Ethylen sind in den Copolymeren ein oder mehr polare, vorzugsweise Sauerstoff enthaltende Comonomere einpolymerisiert. Als polare Comonomere werden bevorzugt: (Meth-)acrylsäure, Maleinsäureanhydrid, Methyl-(meth-)acrylat, Ethylhexyl-(meth-)acrylat, n-Butylacrylat, tert.-Butylacrylat, Glycidyl-methacrylat, wobei die Anhydrid- und Estergruppen partiell hydrolysiert sein können, und jeweils die Carboxylgruppen, soweit im Copolymeren vorhanden, zu 0 bis 40, vorzugsweise 10 bis 32 % neutralisiert sind durch Kationen wie Na⁺, K⁺, Ca⁺⁺, Mg⁺⁺, Zn⁺⁺, NH₄⁺, tert.-Amine, insbesondere solche mit Siedepunkten über 150°C, um eine Geruchsbelästigung bei der Verwendung der Materialien zu vermeiden, ferner funktionelle Gruppen, insbesondere Carbonyl- und Carboxylgruppen enthaltende Amine wie Aminosäuren oder 1-Dimethylamino-3-phenylpropanon-3 oder 1-Diethylaminobutanon-3. Außerdem kommen als Comonomere beispielsweise in Betracht: Maleinsäure, Maleinsäuremonomethylester, Fumarsäure, Itactonsäure, Crotonsäure, Vinylacetat, Vinylpropionat.

Insgesamt kommen als Comonomere 5 bis 50, vorzugsweise 7 bis 40 Gew.% des Copolymeren in Betracht. Bei Anteilen von weniger als 5 % polaren Comonomeren wäre das Polymere mit den nichtfasrigen Kohlehydraten nicht mehr ausreichend mischbar. Bei Verwendung von mehr als einem Comonomeren kann der Anteil eines einzelnen Comonomeren auch unter 5 Gew.% liegen, wenn nur die Summe der polaren Comonomeren mindestens 5 Gew.% beträgt.

Besonders bevorzugt werden Ethylencopolymerisate mit folgenden Comonomergehalten:
ca. 15 bis 20 Gew.% n-Butylacrylat oder 2-Ethylhexylacrylat oder Methylacrylat oder Methylmethacrylat;
ca. 8 Gew.% tert.-Butylacrylat und ca. 4 Gew.% (Meth-)acrylsäure;
ca. 8 Gew.% n-Butylacrylat und 4 bis 5 Gew.% (Meth-)acrylsäure;
ca. 6,5 bis 7,5 Gew.% (Meth-)acrylsäure;
ca. 7,5 Gew.% (Meth-)acrylsäure, wobei 15 Gew.% der Carboxylgruppen mit Zink- oder Natriumionen neutralisiert sind;
30 bis 35 Gew.% n-Butylacrylat und 4 bis 5 Gew.% (Meth-)acrylsäure;
30 bis 35 Gew.% n-Butylacrylat und ca. 4 Gew.% (Meth-)acrylsäure und ca. 1 Gew.% Maleinsäureanhydrid;
30 bis 35 Gew.% N-Butylacrylat und ca. 4 Gew.% Glycidylmethacrylat.

Die Schmelzindices der Ethylencopolymerisate liegen im allgemeinen im Bereich von 0,1 bis 500 g/10 min, gemessen bei 190°C und 2,16 kp (nach DIN 53735). Bevorzugt sind Produkte mit einem Schmelzindex von 2 bis 80 g/10 min. Die Schmelzpunkte der Ethylencopolymerisate liegen im Bereich von 70 bis 115°C.

Wenn das Comonomer eine Ester- oder Säuregruppe enthält, kann das Copolymer unter den Verarbeitungsbedingungen möglicherweise mit dem nichtfasrigen Kohlehydrat unter Um- oder Veresterung reagieren. Dies führt zu einer Verbesserung der mechanischen Eigenschaften des Endproduktes im Vergleich zu einem lediglich gefüllten Polymeren.

Was mit "nichtfasrig" gemeint ist, bedarf keiner näheren Erläuterung. Es handelt sich bei den nichtfasrigen Kohlehydraten um amorphe oder kristalline Pulver von polymeren oder mono- oder oligomeren Kohlehydraten. Der Begriff "nichtfasrig" wurde hier vor allem benutzt, um Cellulose und ihre Derivate auszuschließen.

Zur Definition von "Kohlehydraten" s. z.B. Römpp, Chemie-Lexikon, 8. Aufl., Franckh'sche Verlagsverhandlung, Stuttgart 1983, S. 2147-2152.

Unter den Begriff "Stärke" fallen auch reine Amylose und reines Amylopektin ebenso wie deren Mischungen in jedem beliebigen Verhältnis, sowie Glykogen und Inulin. Als Stärke kommt jegliche Art von modifizierter oder vorzugsweise natürlicher Stärke in Betracht. Sie sind beispielsweise in folgenden Lehrbüchern beschrieben:

Whistler und Pachall, Starch Chemistry and Technology, Academic Press; J.W. Knight, The Starch Industry, Pergamon Press.

Ebenso kommen alle Arten von Mono-, Di- und Oligosacchariden einschließlich der Zuckeralkohole und Zuckersäuren in Betracht, sofern sie unter den Verarbeitungsbedingungen stabil sind, was in der Regel der Fall ist. Sie sind ebenfalls im Chemielexikon von Römpp (s.o.) beschrieben.

Bevorzugt werden beispielsweise Glucose, Fructose, Mannit, Sorbit, Saccharose, Lactose, Gluconsäure, Dextrine.

Die Mengen an wasserlöslichen Kohlehydraten als Füllstoff liegen im Bereich von20 bis 90, vorzugsweise 20 bis 80, insbesondere 40 bis 60 Gew.%, bezogen auf die gefüllten Polyethylencopolymerisate. Außer diesen Kohlehydraten können auch andere übliche Füllstoffe wie Kaolin, Kreide, natürliche oder synthetische Kieselsäuren oder Bariumsulfat, vor allem auch Farbpigmente, eingesetzt werden. Des weiteren wirken sich Gleitmittel, beispielsweise Erucasäureamid oder Ölsäureamid, positiv aus.

Der Gesamtfüllstoffgehalt darf 90, vorzugsweise 80 Gew.% nicht überschreiten.

Die Mischungsanteile werden unabhängig voneinander oder auch vorgemischt in einen Zweiwellenextruder dosiert. Im Extruder wird mindestens das Polymer aufgeschmolzen und die Mischung durch Verwendung von Mischelementen auf der Schnecke homogenisiert und durch eine Düse ausgetragen. Die Temperatur im Extruderkopf (Düse und die Zone davor) beträgt 70 bis 125, vorzugsweise 95 bis 115°C. Das Material kann anschließend auf üblichem Wege granuliert oder auch in Form von Folien oder Strängen belassen werden.

Das Granulat oder auch der noch plastische Strang können in einem weiteren üblichen Arbeitsgang zu Folien oder anderen Formkörpern verarbeitet werden, beispielsweise durch Spritzguß, Blasformen, Kalandrieren und andere übliche Techniken der Folienherstellung.

Bei Füllstoffanteilen über 60°C hat der Extruder vorzugsweise mehrere Mischelemente mit dazwischenliegenden Förderelementen, wobei unter Umständen die Maschine im Bereich der Misch- und/oder Förderelemente nicht beheizt, sondern sogar gekühlt wird.

Das Verfahren arbeitet ohne jeglichen Wasserzusatz. Die verwendeten Füllstoffe und Polymeren müssen aber auch nicht besonders getrocknet werden. Ihr natürlicher Feuchtigkeitsgehalt stört in der Regel nicht. Lediglich zur Herstellung von Blasfolien oder Blasformlingen wie Flaschen kann eine Vortrocknung der Einsatzstoffe oder des Granulates erforderlich sein.

Die erfindungsgemäß erhältlichen Produkte sind aufgrund ihrer verbesserten Verrottbarkeit, die anhand des Gehaltes an nichtfasrigen Kohlehydraten praktisch nach Belieben eingestellt werden kann, besonders als Verpackungsmaterial (einschließlich Tragetaschen, Behälter, Müllbeutel, Folien, Schrumpffolien) sowie als Mulchfolie oder Saatband in der Landwirtschaft geeignet. Ferner eignen sie sich hervorragend als Träger und Kohlenstoffquelle für Bakterien zur Denitrifikation von Brauch- und Abwasser. Sodann haben sich die Produkte sehr gut bewährt als Dispenser für Pheromone.

Die mechanischen Eigenschaften der Produkte sind überraschend gut und sprechen für eine chemische Reaktion zwischen Ethylencopolymer und Füllstoff.

Die in den Beispielen genannten Prozente beziehen sich auf das Gewicht.

Für die Beispiele zur Herstellung der Granulate wurde pro Komponente eine Differential-Dosierwaage der Fa. K-TRON Soder AG, Niederlenz, CH-5702, verwendet. Die einzelnen Komponenten wurden mit Hilfe dieser Waagen direkt in den Trichter eines Extruders, meist vom Typ ZSK 30 der Fa. Werner & Pfleiderer, Stuttgart-Feuerbach, dosiert. Der Durchsatz an Gesamtmischung lag bei der Granulatherstellung stets im Bereich von 2 bis 5 kg/Stunde. Die angegebenen Melt Flow Index (MFI)-Werte der eingesetzten Polymeren sind MFI 190°C/2,16 kp.Die Werte sind stets in g/10 min angegeben.

### Beispiele

### Beispiel 1

80 Teile eines Copolymerisats vom MFI 2,5 aus 92,5 % Ethylen und 7,5 % Acrylsäure, dessen Carboxylgruppen nach der Polymerisation zu 28 % mit Natriumhydroxid neutralisiert wurden, und 20 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 90, 110, 110, 110 und 115°C; die Düse wurde auf 115°C aufgeheizt. Der hierbei erhaltene Strang wurde zu Granulat zerkleinert.

### Beispiel 2

70 Teile des Copolymerisats von Beispiel 1 und 30 Teile Weizenstärke wurden gemäß Beispiel 1 in einem Doppelschneckenextruder vermischt und extrudiert und anschließend granuliert. Die Temperatur der Extruderschüsse wurden auf 85, 90, 110, 110, 110 und 115°C eingestellt. Die Düse hatte ebenfalls eine Temperatur von 115°C.

### Beispiel 3

60 Teile des Copolymerisats von Beispiel 1 und 40 Teile Weizenstärke wurden gemäß Beispiel 1 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 4

50 Teile des Copolymerisats von Beispiel 1 und 50 Teile Weizenstärke wurden gemäß Beispiel 1 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 5

40 Teile des Copolymerisats von Beispiel 1 und 60 Teile Weizenstärke wurden gemäß Beispiel 1 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 6

30 Teile des Copolymerisats von Beispiel 1 und 70 Teile Weizenstärke wurden gemäß Beispiel 1 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 7

80 Teile eines Copolymerisats vom MFI 2,6 aus 87,9 % Ethylen und 12,1 % Acrylsäure, dessen Carboxylgruppen nach der Polymerisation zu 28 % mit Natriumhydroxid neutralisiert wurden, und 20 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 100, 100 und 100°C. Die Düse wurde auf 110°C aufgeheizt. Der hierbei erhaltene Strang wurde zu Granulat zerkleinert.

### Beispiel 8

70 Teile des Copolymerisats von Beispiel 7 und 30 Teile Weizenstärke wurden gemäß Beispiel 7 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 9

60 Teile des Copolymerisats von Beispiel 7 und 40 Teile Weizenstärke wurden gemäß Beispiel 7 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 10

50 Teile des Copolymerisats von Beispiel 7 und 50 Teile Weizenstärke wurden gemäß Beispiel 7 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 11

40 Teile des Copolymerisats von Beispiel 7 und 60 Teile Weizenstärke wurden gemäß Beispiel 7 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 12

30 Teile des Copolymerisats von Beispiel 7 und 70 Teile Weizenstärke wurden gemäß Beispiel 7 in einem Doppelschneckenextruder vermischt und extrudiert und anschließend granuliert. Die Temperatur der Extruderschüsse wurden auf 85, 95, 100, 100, 100 und 100°C eingestellt. Die Düse hatte eine Temperatur von 110°C.

### Beispiel 13

80 Teile eines Copolymerisats vom MFI 2,55 aus 92,5 % Ethylen und 7,5 % Acrylsäure, dessen Carboxylgruppen nach der Polymerisation zu 28 % mit Natriumhydroxid neutralisiert wurden, und 20 Teile Kartoffelstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C. Die Düse wurde auf 110°C aufgeheizt. Der hierbei erhaltene Strang wurde zu Granulat zerkleinert.

### Beispiel 14

70 Teile des Copolymerisats von Beispiel 13 und 30 Teile Kartoffelstärke wurden gemäß Beispiel 13 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 15

60 Teile des Copolymerisats von Beispiel 13 und 40 Teile Kartoffelstärke wurden gemäß Beispiel 13 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 16

50 Teile des Copolymerisats von Beispiel 13 und 50 Teile Kartoffelstärke wurden gemäß Beispiel 13 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 17

40 Teile des Copolymerisats von Beispiel 13 und 60 Teile Kartoffelstärke wurden gemäß Beispiel 13 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 18

30 Teile des Copolymerisats von Beispiel 13 und 70 Teile Kartoffelstärke wurden gemäß Beispiel 13 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 19

80 Teile eines Copolymerisats vom MFI 2,5 aus 93 % Ethylen und 7 % Acrylsäure, dessen Carboxylgruppen nach der Polymerisation zu 28 % mit Natriumhydroxid neutralisiert wurden, und 20 Teile Maisstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 100, 110 und 110°C; die Düse wurde auf 110°C aufgeheizt. Der hierbei erhaltene Strang wurde zu Granulat zerkleinert.

### Beispiel 20

70 Teile des Copolymerisats von Beispiel 19 und 30 Teile Maisstärke wurden gemäß Beispiel 19 in einem Doppelschneckenextruder vermischt und extrudiert und anschließend granuliert. Die Temperatur der Extruderschüsse wurden auf 85, 95, 100, 100, 110 und 110°C eingestellt. Die Düse hatte ebenfalls eine Temperatur von 110°C.

### Beispiel 21

60 Teile des Copolymerisats von Beispiel 19 und 40 Teile Maisstärke wurden gemäß Beispiel 19 in einem Doppelschneckenextruder vermischt und extrudiert und anschließend granuliert. Die Temperatur der Extruderschüsse wurden auf 85, 95, 100, 100, 110 und 110°C eingestellt. Die Düse hatte ebenfalls eine Temperatur von 110°C.

### Beispiel 22

50 Teile des Copolymerisats von Beispiel 19 und 50 Teile Maisstärke wurden gemäß Beispiel 19 in einem Doppelschneckenextruder vermischt und extrudiert und anschließend granuliert. Die Temperatur der Extruderschüsse wurden auf 85, 95, 100, 100, 110 und 110°C eingestellt. Die Düse hatte ebenfalls eine Temperatur von 110°C.

### Beispiel 23

40 Teile des Copolymerisats von Beispiel 19 und 60 Teile Maisstärke wurden gemäß Beispiel 19 in einem Doppelschneckenextruder vermischt und extrudiert und anschließend granuliert. Die Temperatur der Extruderschüsse wurden auf 85, 95, 100, 100, 110 und 110°C eingestellt. Die Düse hatte ebenfalls eine Temperatur von 110°C.

### Beispiel 24

30 Teile des Copolymerisats von Beispiel 19 und 70 Teile Maisstärke wurden gemäß Beispiel 19 in einem Doppelschneckenextruder vermischt und extrudiert und anschließend granuliert. Die Temperatur der Extruderschüsse wurden auf 85, 95, 100, 100, 110 und 110°C eingestellt. Die Düse hatte ebenfalls eine Temperatur von 110°C.

### Beispiel 25

80 Teile eines Copolymerisats vom MFI 2,6 aus 88 % Ethylen und 12 % Acrylsäure, dessen Carboxylgruppen nach der Polymerisation zu 27 % mit Natriumhydroxid neutralisiert wurden, und 20 Teile Reisstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 105, 110, 110 und 110°C; die Düse wurde auf 115°C aufgeheizt. Der hierbei erhaltene Strang wurde zu Granulat zerkleinert.

### Beispiel 26

70 Teile des Copolymerisats von Beispiel 25 und 30 Teile Reisstärke wurden gemäß Beispiel 25 in einem Doppelschneckenextruder vermischt und extrudiert und anschließend granuliert. Die Temperatur der Extruderschüsse wurden auf 85, 95, 105, 110, 110 und 110°C eingestellt. Die Düse hatte ebenfalls eine Temperatur von 110°C.

### Beispiel 27

60 Teile des Copolymerisats von Beispiel 25 und 40 Teile Reisstärke wurden gemäß Beispiel 25 in einem Doppelschneckenextruder vermischt und extrudiert und anschließend granuliert. Die Temperatur der Extruderschüsse wurden auf 85, 95, 105, 110, 110 und 110°C eingestellt. Die Düse hatte ebenfalls eine Temperatur von 110°C.

### Beispiel 28

50 Teile des Copolymerisats von Beispiel 25 und 50 Teile Reisstärke wurden gemäß Beispiel 25 in einem Doppelschneckenextruder vermischt und extrudiert und anschließend granuliert. Die Temperatur der Extruderschüsse wurden auf 85, 95, 105, 110, 110 und 110°C eingestellt. Die Düse hatte ebenfalls eine Temperatur von 110°C.

### Beispiel 29

40 Teile des Copolymerisats von Beispiel 25 und 60 Teile Reisstärke wurden gemäß Beispiel 25 in einem Doppelschneckenextruder vermischt und extrudiert und anschließend granuliert. Die Temperatur der Extruderschüsse wurden auf 85, 95, 105, 110, 110 und 110°C eingestellt. Die Düse hatte ebenfalls eine Temperatur von 110°C.

### Beispiel 30

30 Teile des Copolymerisats von Beispiel 25 und 70 Teile Reisstärke wurden gemäß Beispiel 25 in einem Doppelschneckenextruder vermischt und extrudiert und anschließend granuliert. Die Temperatur der Extruderschüsse wurden auf 85, 95, 105, 110, 110 und 110°C eingestellt. Die Düse hatte ebenfalls eine Temperatur von 110°C.

### Beispiel 31

80 Teile eines Copolymerisats vom MFI 2,6 aus 88,5 % Ethylen und 11,5 % Acrylsäure, dessen Carboxylgruppen nach der Polymerisation zu 30 % mit Natriumhydroxid neutralisiert wurden, und 20 Teile Tapiokastärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 32

70 Teile des Copolymerisats von Beispiel 31 und 30 Teile Tapiokastärke wurden gemäß Beispiel 31 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 33

60 Teile des Copolymerisats von Beispiel 31 und 40 Teile Tapiokastärke wurden gemäß Beispiel 31 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 34

50 Teile des Copolymerisats von Beispiel 31 und 50 Teile Tapiokastärke wurden gemäß Beispiel 31 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 35

40 Teile des Copolymerisats von Beispiel 31 und 60 Teile Tapiokastärke wurden gemäß Beispiel 31 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 36

30 Teile des Copolymerisats von Beispiel 31 und 70 Teile Tapiokastärke wurden gemäß Beispiel 31 in einem Doppelschneckenextruder vermischt und extrudiert und anschließend granuliert. Die Temperatur der Extruderschüsse wurden auf 85, 95, 100, 110, 110 und 110°C eingestellt. Die Düse hatte ebenfalls eine Temperatur von 110°C.

### Beispiel 37

50 Teile eines Copolymerisats vom MFI 11 aus 79,6 % Ethylen und 20,4 % Acrylsäure und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 95, 110, 110, 110, 110 und 110°C; die Düse wurde auf 110°C aufgeheizt. Der hierbei erhaltene Strang wurde zu Granulat zerkleinert.

### Beispiel 38

20 Teile des Copolymerisats von Beispiel 37 und 80 Teile Weizenstärke wurden gemäß Beispiel 37 in einem Doppelschneckenextruder vermischt und extrudiert und anschließend granuliert. Die Temperatur der Extruderschüsse wurden auf 95, 110, 110, 110, 110 und 110°C eingestellt. Die Düse hatte ebenfalls eine Temperatur von 110°C.

### Beispiel 39

80 Teile des Copolymerisats von Beispiel 37 und 20 Teile Weizenstärke wurden gemäß Beispiel 37 in einem Doppelschneckenextruder vermischt und extrudiert und anschließend granuliert. Die Temperatur der Extruderschüsse wurden auf 95, 110, 110, 110, 110 und 110°C eingestellt. Die Düse hatte ebenfalls eine Temperatur von 110°C.

### Beispiel 40

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Glucose wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 41

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Fructose wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 42

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Galactose wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 43

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Mannit wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 44

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Lactose wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 45

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Maltose wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 46

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Saccharose wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 47

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Inulin wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 48

50 Teile eines Copolymerisats vom MFI 2,5 aus 87,9 % Ethylen und 12,1 % Acrylsäure, dessen Carboxylgruppen nach der Polymerisation zu 28 % mit Natriumhydroxid neutralisiert wurden, und 50 Teile Amylose wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 110°C aufgeheizt. Der hierbei erhaltene Strang wurde zu Granulat zerkleinert.

### Beispiel 49

50 Teile eines Copolymerisats vom MFI 6,0 aus 86,9 % Ethylen, 4,3 % Acrylsäure und 8,8 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 75, 85, 95, 100, 100 und 100°C; die Düse wurde auf 100°C aufgeheizt. Der hierbei erhaltene Strang wurde zu Granulat zerkleinert.

### Beispiel 50

50 Teile eines Copolymerisats vom MFI 7,0 aus 88,1 % Ethylen, 6,3 % Acrylsäure und 5,6 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 75, 85, 95, 100, 100 und 100°C; die Düse wurde auf 100°C aufgeheizt. Der hierbei erhaltene Strang wurde zu Granulat zerkleinert.

### Beispiel 51

50 Teile eines Copolymerisats vom MFI 7,3 aus 87,3 % Ethylen, 7,9 % Acrylsäure und 4,8 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 80, 90, 100, 100, 100 und 110°C; die Düse wurde auf 110°C aufgeheizt. Der hierbei erhaltene Strang wurde zu Granulat zerkleinert.

### Beispiel 52

50 Teile eines Copolymerisats vom MFI 1,7 aus 85 % Ethylen und 15 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 75, 85, 95, 95, 95 und 95°C; die Düse wurde auf 95°C aufgeheizt. Der hierbei erhaltene Strang wurde zu Granulat zerkleinert.

### Beispiel 53

50 Teile eines Copolymerisats vom MFI 19 aus 85 % Ethylen und 15 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 70, 85, 85, 90, 95 und 95°C; die Düse wurde auf 95°C aufgeheizt. Der hierbei erhaltene Strang wurde zu Granulat zerkleinert.

### Beispiel 54

50 Teile eines Copolymerisats vom MFI 1,8 aus 80 % Ethylen und 20 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 75, 85, 95, 95, 95 und 95°C; die Düse wurde auf 95°C aufgeheizt. Der hierbei erhaltene Strang wurde zu Granulat zerkleinert.

### Beispiel 55

50 Teile eines Copolymerisats vom MFI 20 aus 80 % Ethylen und 20 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 70, 85, 85, 90, 95 und 95°C; die Düse wurde auf 95°C aufgeheizt. Der hierbei erhaltene Strang wurde zu Granulat zerkleinert.

### Beispiel 56

50 Teile eines Copolymerisats vom MFI 7 aus 88 % Ethylen, 4 % Acrylsäure und 8 % t-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 75, 85, 95, 100, 100 und 100°C; die Düse wurde auf 100°C aufgeheizt. Der hierbei erhaltene Strang wurde zu Granulat zerkleinert.

### Beispiel 57

50 Teile eines Copolymerisats vom MFI 7 aus 87,5 % Ethylen, 4,5 % Acrylsäure und 8,0 % n-Butylacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 80, 95, 95, 100, 100 und 100°C; die Düse wurde auf 100°C aufgeheizt. Der hierbei erhaltene Strang wurde zu Granulat zerkleinert.

### Beispiel 58

50 Teile eines Copolymerisats vom MFI 7 aus 93,5 % Ethylen und 6,5 % Acrylsäure und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 100°C aufgeheizt. Der hierbei erhaltene Strang wurde zu Granulat zerkleinert.

### Beispiel 59

50 Teile eines Copolymerisats vom MFI 7,1 aus 92,5 % Ethylen und 7,5 % Acrylsäure und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 100°C aufgeheizt. Der hierbei erhaltene Strang wurde zu Granulat zerkleinert.

### Beispiel 60

50 Teile eines Copolymerisats vom MFI 7,5 aus 92,5 % Ethylen und 7,5 % Methacrylsäure und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 100°C aufgeheizt. Der hierbei erhaltene Strang wurde zu Granulat zerkleinert.

### Beispiel 61

50 Teile eines Copolymerisats vom MFI 15 aus 93,5 % Ethylen und 6,5 % Acrylsäure und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 100°C aufgeheizt. Der hierbei erhaltene Strang wurde zu Granulat zerkleinert.

### Beispiel 62

50 Teile eines Copolymerisats vom MFI 16 aus 92,5 % Ethylen und 7,5 % Acrylsäure und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 85, 95, 100, 110, 110 und 110°C; die Düse wurde auf 100°C aufgeheizt. Der hierbei erhaltene Strang wurde zu Granulat zerkleinert.

### Beispiel 63

50 Teile eines Copolymerisats vom MFI 1,6 aus 80 % Ethylen und 20 % Methylmethacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 75, 85, 95, 95, 95 und 95°C; die Düse wurde auf 95°C aufgeheizt. Der hierbei erhaltene Strang wurde zu Granulat zerkleinert.

### Beispiel 64

50 Teile eines Copolymerisats vom MFI 19,5 aus 80 % Ethylen und 20 % Methylmethacrylat und 50 Teile Weizenstärke wurden über zwei unabhängig gesteuerte Dosierwaagen in den Trichter eines Extruders der oben genannten Bauart dosiert und extrudiert. Die Temperatur des aus sechs Schüssen bestehenden Extrudermantels betrug 75, 85, 95, 95, 100 und 100°C; die Düse wurde auf 100°C aufgeheizt. Der hierbei erhaltene Strang wurde zu Granulat zerkleinert.

### Beispiel 65

Das wie in Beispiel 1 hergestellte Granulat wurde in den Trichter einer Spritzgußmaschine gegeben. In der Spritzgußmaschine wurde das Weizenstärke enthaltende Granulat bei 140°C aufgeschmolzen und zu Rundscheiben (1 mm Dicke, 6 cm Durchmesser) verarbeitet.

### Beispiel 66

Das wie in Beispiel 6 hergestellte Granulat wurde in den Trichter einer Spritzgußmaschine gegeben. In der Spritzgußmaschine wurde das Weizenstärke enthaltende Granulat bei 165°C aufgeschmolzen und zu Rundscheiben (1 mm Dicke, 6 cm Durchmesser) verarbeitet.

### Beispiel 67

Das wie in Beispiel 7 hergestellte Granulat wurde in den Trichter einer Spritzgußmaschine gegeben. In der Spritzgußmaschine wurde das Weizenstärke enthaltende Granulat bei 170°C aufgeschmolzen und zu Rundscheiben (1 mm Dicke, 6 cm Durchmesser) verarbeitet.

### Beispiel 68

Das wie in Beispiel 12 hergestellte Granulat wurde in den Trichter einer Spritzgußmaschine gegeben. In der Spritzgußmaschine wurde das Weizenstärke enthaltende Granulat bei 170°C aufgeschmolzen und zu Rundscheiben (1 mm Dicke, 6 cm Durchmesser) verarbeitet.

### Beispiel 69

Das wie in Beispiel 16 hergestellte Granulat wurde in den Trichter einer Spritzgußmaschine gegeben. In der Spritzgußmaschine wurde das Kartoffelstärke enthaltende Granulat bei 170°C aufgeschmolzen und zu Rundscheiben (1 mm Dicke, 6 cm Durchmesser) verarbeitet.

### Beispiel 70

Das wie in Beispiel 23 hergestellte Granulat wurde in den Trichter einer Spritzgußmaschine gegeben. In der Spritzgußmaschine wurde das Maisstärke enthaltende Granulat bei 170°C aufgeschmolzen und zu Rundscheiben (1 mm Dicke, 6 cm Durchmesser) verarbeitet.

### Beispiel 71

Das wie in Beispiel 30 hergestellte Granulat wurde in den Trichter einer Spritzgußmaschine gegeben. In der Spritzgußmaschine wurde das Reisstärke enthaltende Granulat bei 175°C aufgeschmolzen und zu Rundscheiben (1 mm Dicke, 6 cm Durchmesser) verarbeitet.

### Beispiel 72

Das wie in Beispiel 32 hergestellte Granulat wurde in den Trichter einer Spritzgußmaschine gegeben. In der Spritzgußmaschine wurde das Tapiokastärke enthaltende Granulat bei 170°C aufgeschmolzen und zu Rundscheiben (1 mm Dicke, 6 cm Durchmesser) verarbeitet.

### Beispiel 73

Das wie in Beispiel 38 hergestellte Granulat wurde in den Trichter einer Spritzgußmaschine gegeben. In der Spritzgußmaschine wurde das Weizenstärke enthaltende Granulat bei 175°C aufgeschmolzen und zu Rundscheiben (1 mm Dicke, 6 cm Durchmesser) verarbeitet.

### Beispiel 74

Das wie in Beispiel 40 hergestellte Granulat wurde in den Trichter einer Spritzgußmaschine gegeben. In der Spritzgußmaschine wurde das Glucose enthaltende Granulat bei 165°C aufgeschmolzen und zu Rundscheiben (1 mm Dicke, 6 cm Durchmesser) verarbeitet.

### Beispiel 75

Das wie in Beispiel 43 hergestellte Granulat wurde in den Trichter einer Spritzgußmaschine gegeben. In der Spritzgußmaschine wurde das Mannit enthaltende Granulat bei 165°C aufgeschmolzen und zu Rundscheiben (1 mm Dicke, 6 cm Durchmesser) verarbeitet.

### Beispiel 76

Das wie in Beispiel 44 hergestellte Granulat wurde in den Trichter einer Spritzgußmaschine gegeben. In der Spritzgußmaschine wurde das Lactose enthaltende Granulat bei 165°C aufgeschmolzen und zu Rundscheiben (1 mm Dicke, 6 cm Durchmesser) verarbeitet.

### Beispiel 77

Das wie in Beispiel 48 hergestellte Granulat wurde in den Trichter einer Spritzgußmaschine gegeben. In der Spritzgußmaschine wurde das Amylose enthaltende Granulat bei 165°C aufgeschmolzen und zu Rundscheiben (1 mm Dicke, 6 cm Durchmesser) verarbeitet.

### Beispiel 78

Das wie in Beispiel 50 hergestellte Granulat wurde in den Trichter einer Spritzgußmaschine gegeben. In der Spritzgußmaschine wurde das Weizenstärke enthaltende Granulat bei 170°C aufgeschmolzen und zu Rundscheiben (1 mm Dicke, 6 cm Durchmesser) verarbeitet.

### Beispiel 79

Das wie in Beispiel 51 hergestellte Granulat wurde in den Trichter einer Spritzgußmaschine gegeben. In der Spritzgußmaschine wurde das Weizenstärke enthaltende Granulat bei 170°C aufgeschmolzen und zu Rundscheiben (1 mm Dicke, 6 cm Durchmesser) verarbeitet.

### Beispiel 80

Das wie in Beispiel 60 hergestellte Granulat wurde in den Trichter einer Spritzgußmaschine gegeben. In der Spritzgußmaschine wurde das Weizenstärke enthaltende Granulat bei 170°C aufgeschmolzen und zu Rundscheiben (1 mm Dicke, 6 cm Durchmesser) verarbeitet.

### Beispiel 81

Das wie in Beispiel 1 hergestellte Granulat wurde in den Trichter einer üblichen Folien-Blasmaschine eingefüllt. In der Folien-Blasmaschine wurde das Weizenstärke enthaltende Granulat bei 135°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 82

Das wie in Beispiel 6 hergestellte Granulat wurde in den Trichter einer üblichen Folien-Blasmaschine eingefüllt. In der Folien-Blasmaschine wurde das Weizenstärke enthaltende Granulat bei 135°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 83

Das wie in Beispiel 7 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 84

Das wie in Beispiel 12 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 85

Das wie in Beispiel 16 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 86

Das wie in Beispiel 16 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 30 µm verarbeitet. Die erhaltene Folie war durchsichtig und ließ sich mit üblichen Geräten verschweißen.

### Beispiel 87

Das wie in Beispiel 16 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 25 µm verarbeitet. Die erhaltene Folie war durchsichtig und ließ sich mit üblichen Geräten verschweißen.

### Beispiel 88

Das wie in Beispiel 16 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 75 µm verarbeitet. Die erhaltene Folie war durchsichtig und ließ sich mit üblichen Geräten verschweißen.

### Beispiel 89

Das wie in Beispiel 30 hergestellte Granulat wurde in den Trichter einer üblichen Folien-Blasmaschine eingefüllt. In der Folien-Blasmaschine wurde das Reisstärke enthaltende Granulat bei 140°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 90

Das wie in Beispiel 32 hergestellte Granulat wurde in den Trichter einer üblichen Folien-Blasmaschine eingefüllt. In der Folien-Blasmaschine wurde das Tapiokastärke enthaltende Granulat bei 140°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 91

Das wie in Beispiel 38 hergestellte Granulat wurde in den Trichter einer üblichen Folien-Blasmaschine eingefüllt. In der Folien-Blasmaschine wurde das Weizenstärke enthaltende Granulat bei 145°C aufgeschmolzen und zu einer Kunststoffolie mit einer Dicke von 40 µm verarbeitet. Die erhaltene Folie war durchsichtig und ließ sich mit üblichen Geräten verschweißen.

### Beispiel 92

Das wie in Beispiel 40 hergestellte Granulat wurde in den Trichter einer üblichen Folien-Blasmaschine eingefüllt. In der Folien-Blasmaschine wurde das Glucose enthaltende Granulat bei 140°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 93

Das wie in Beispiel 44 hergestellte Granulat wurde in den Trichter einer üblichen Folien-Blasmaschine eingefüllt. In der Folien-Blasmaschine wurde das Lactose enthaltende Granulat bei 135°C aufgeschmolzen und zu einer Kunststoffolie mit einer Dicke von 40 µm verarbeitet. Die erhaltene Folie war durchsichtig und ließ sich mit üblichen Geräten verschweißen.

### Beispiel 94

Das wie in Beispiel 48 hergestellte Granulat wurde in den Trichter einer üblichen Folien-Blasmaschine eingefüllt. In der Folien-Blasmaschine wurde das Amylose enthaltende Granulat bei 135°C aufgeschmolzen und zu einer Kunststoffolie mit einer Dicke von 55 µm verarbeitet. Die erhaltene Folie war durchsichtig und ließ sich mit üblichen Geräten verschweißen.

### Beispiel 95

Das wie in Beispiel 50 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 50 µm verarbeitet. Die erhaltene Folie war durchsichtig und ließ sich mit üblichen Geräten verschweißen.

### Beispiel 96

Das wie in Beispiel 60 hergestellte Granulat wurde in den Trichter einer üblichen Folien-Blasmaschine eingefüllt. In der Folien-Blasmaschine wurde das Weizenstärke enthaltende Granulat bei 140°C aufgeschmolzen und zu einer Kunststoffolie mit einer Dicke von 32 µm verarbeitet. Die erhaltene Folie war durchsichtig und ließ sich mit üblichen Geräten verschweißen.

### Beispiel 97

Das wie in Beispiel 1 hergestellte Granulat wurde in den Trichter einer üblichen Blasformmaschine eingefüllt. In der Blasformmaschine wurde das Weizenstärke enthaltende Granulat bei 140°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 98

Das wie in Beispiel 6 hergestellte Granulat wurde in den Trichter einer üblichen Blasformmaschine eingefüllt. In der Blasformmaschine wurde das Weizenstärke enthaltende Granulat bei 145°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 99

Das wie in Beispiel 7 hergestellte Granulat wurde in den Trichter einer üblichen Blasformmaschine eingefüllt. In der Blasformmaschine wurde das Weizenstärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 100

Das wie in Beispiel 12 hergestellte Granulat wurde in den Trichter einer üblichen Blasformmaschine eingefüllt. In der Blasformmaschine wurde das Weizenstärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 101

Das wie in Beispiel 16 hergestellte Granulat wurde in den Trichter einer üblichen Blasformmaschine eingefüllt. In der Blasformmaschine wurde das Weizenstärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 102

Das wie in Beispiel 30 hergestellte Granulat wurde in den Trichter einer üblichen Blasformmaschine eingefüllt. In der Blasformmaschine wurde das Reisstärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 103

Das wie in Beispiel 32 hergestellte Granulat wurde in den Trichter einer üblichen Blasformmaschine eingefüllt. In der Blasformmaschine wurde das Tapiokastärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 104

Das wie in Beispiel 38 hergestellte Granulat wurde in den Trichter einer üblichen Blasformmaschine eingefüllt. In der Blasformmaschine wurde das Weizenstärke enthaltende Granulat bei 155°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 105

Das wie in Beispiel 40 hergestellte Granulat wurde in den Trichter einer üblichen Blasformmaschine eingefüllt. In der Blasformmaschine wurde das Glucose enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 106

Das wie in Beispiel 44 hergestellte Granulat wurde in den Trichter einer üblichen Blasformmaschine eingefüllt. In der Blasformmaschine wurde das Lactose enthaltende Granulat bei 145°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 107

Das wie in Beispiel 48 hergestellte Granulat wurde in den Trichter einer üblichen Blasformmaschine eingefüllt. In der Blasformmaschine wurde das Amylose enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 108

Das wie in Beispiel 50 hergestellte Granulat wurde in den Trichter einer üblichen Blasformmaschine eingefüllt. In der Blasformmaschine wurde das Weizenstärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 109

Das wie in Beispiel 60 hergestellte Granulat wurde in den Trichter einer üblichen Blasformmaschine eingefüllt. In der Blasformmaschine wurde das Weizenstärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

### Beispiel 110

Das wie in Beispiel 61 hergestellte Granulat wurde in den Trichter einer üblichen Blasformmaschine eingefüllt. In der Blasformmaschine wurde das Weizenstärke enthaltende Granulat bei 150°C aufgeschmolzen und zu Flaschen (4,5 cm Durchmesser, 9,5 cm Höhe) verarbeitet. Die erhaltenen Formkörper waren gut entformbar und mechanisch stabil.

## Patentansprüche

1. Verfahren zur Herstellung von mit 20 bis 90 Gew.% eines nichtfasrigen Kohlehydrates gefüllten polaren Ethylencopolymeren, dadurch gekennzeichnet, daß dabei kein Wasser zugesetzt und ein polares Ethylencopolymeres eingesetzt wird, das ohne Hilfsmittel in Wasser nicht dispergierbar ist, und die Mischung der Kompontenten extrudiert wird.

2. Verfahren nach Anspruch 1, dadurch gekennzeichnet, daß als nichtfasriges Kohlehydrat Stärke oder deren Derivate, Oligo-, Di- oder Monosaccharide oder Zuckeralkohole eingesetzt werden.

3. Verfahren nach Anspruch 1, dadurch gekennzeichnet, daß als nichtfasriges Kohlehydrat Stärke eingesetzt wird.

4. Verfahren nach Anspruch 1, dadurch gekennzeichnet, daß als nichtfasriges Kohlehydrat Mono-, Di- oder Oligosaccharide eingesetzt werden.

5. Verfahren nach einem der Ansprüche 1 bis 4, dadurch gekennzeichnet, daß ein polares Ethylencopolymeres eingesetzt wird, das 5 bis 50 Gew.% an Sauerstoff enthaltenden Comonomeren einpolymerisiert enthält.

6. Verfahren nach Anspruch 5, dadurch gekennzeichnet, daß ein Copolymerisat eingesetzt wird, das ein oder mehrere Comonomere aus folgender Gruppe enthält: (Meth-)acrylsäure, (Meth-)acrylsäureester von Alkoholen mit 1 bis 8 Kohlenstoffatomen, (Poly-)ethylenglykol-mono(meth-)acrylsäureester mit 1 bis 12 Ethylenoxid-Einheiten im Molekül, Maleinsäure, Maleinsäureanhydrid, Fumarsäure, Itaconsäure, Crotonsäure, Ester oder Halbester der genannten Säuren mit Alkoholen mit 1 bis 8 Kohlenstoffatomen, Vinylacetat, Vinylpropionat, wobei Carboxylgruppen zu 0 bis 40 % durch Salzbildung neutralisiert sind.

7. Verfahren nach Anspruch 5, dadurch gekennzeichnet, daß ein Copolymerisat eingesetzt wird, das ein oder mehrere Comonomere aus folgender Gruppe enthält: (Meth-)acrylsäure, Maleinsäureanhydrid, Methyl-(meth-)acrylat, Ethylhexyl-(meth-)acrylat, n-Butylacrylat, tert.-Butylacrylat, Glycidyl-methacrylat.

8. Verwendung der nach den Ansprüchen 1 bis 7 hergestellten gefüllten Ethylencopolymerisate als Verpackungsmaterial.

9. Verwendung der nach den Ansprüchen 1 bis 7 hergestellten gefüllten Ethylencopolymerisate als Folien, Schrumpffolien, Behälter, Tragetaschen, Müllbeutel.

10. Verwendung der nach den Ansprüchen 1 bis 7 hergestellten gefüllten Ethylencopolymerisate in Landwirtschaft und Obstbau als Mulchfolie und Pheromondispenser.

11. Verwendung der nach den Ansprüchen 1 bis 7 hergestellten gefüllten Ethylencopolymerisate als Träger und Kohlenstoffquelle für Bakterien zur Denitrifikation bei der Wasseraufbereitung.

## Claims

1. A process for the preparation of a polar ethylene copolymer filled with from 20 to 90% by weight of a non-fibrous carbohydrate, wherein no water is added and a polar ethylene copolymer which is not dispersible in water without assistants is used, and the mixture of the components is extruded.

2. A process as claimed in claim 1, wherein the non-fibrous carbohydrate used is starch or a derivative thereof, an oligo-, di- or monosaccharide or a sugar alcohol.

3. A process as claimed in claim 1, wherein the non-fibrous carbohydrate used is starch.

4. A process as claimed in claim 1, wherein the non-fibrous carbohydrate used is a mono-, di- or oligosaccharide.

5. A process as claimed in any of claims 1 to 4, wherein a polar ethylene copolymer which contains from 5 to 50% by weight of polymerized oxygen-containing copolymers is used.

6. A process as claimed in claim 5, wherein a copolymer which contains one or more comonomers from the following group is used: (meth)acrylic acid, (meth)acrylates of alcohols of 1 to 8 carbon atoms, (poly)ethylene glycol mono(meth)acrylates having from 1 to 12 ethylene oxide units in the molecule, maleic acid, maleic anhydride, fumaric acid, itaconic acid, crotonic acid, esters or half esters of the stated acids with alcohols of 1 to 8 carbon atoms, vinyl acetate and vinyl propionate, from 0 to 40% of the carboxyl groups being neutralized through salt formation.

7. A process as claimed in claim 5, wherein a copolymer which contains one or more comonomers from the following group is used: (meth)acrylic acid, maleic anhydride, methyl (meth)acrylate, ethylhexyl (meth)acrylate, n-butyl acrylate, tert-butyl acrylate and glycidyl methacrylate.

8. Use of a filled ethylene copolymer prepared as claimed in any of claims 1 to 7 as a packaging material.

9. Use of a filled ethylene copolymer prepared as claimed in any of claims 1 to 7 as a film, shrink film, container, carrier bag or garbage bag.

10. Use of a filled ethylene copolymer prepared as claimed in any of claims 1 to 7 in agriculture and fruit growing, as a mulch film and pheromone dispenser.

11. Use of a filled ethylene copolymer prepared as claimed in any of claims 1 to 7 as a substrate and carbon source for bacteria for denitrification in water treatment.

## Revendications

1. Procédé de fabrication de copolymères de l'éthylène polaires, chargés de 20 à 90% en poids d'un hydrate de carbone non fibreux, caractérisé en ce que l'on n'ajoute pas d'eau et en ce que l'on utilise un copolymère de l'éthylène polaire qui n'est pas dispersible dans l'eau sans adjuvant et en ce que l'on extrude le mélange des composants.

2. Procédé suivant la revendication 1, caractérisé en ce qu'à titre d'hydrate de carbone non fibreux, on utilise l'amidon et ses dérivés, des oligo-, di- ou monosaccharides ou des alcools-sucres.

3. Procédé suivant la revendication 1, caractérisé en ce que l'on utilise de l'amidon à titre d'hydrate de carbone non fibreux.

4. Procédé suivant la revendication 1, caractérisé en ce que l'on utilise des mono-, di- ou oligosaccharides à titre d'hydrate de carbone non fibreux.

5. Procédé suivant l'une quelconque des revendications 1 à 4, caractérisé en ce que l'on utilise un copolymère de l'éthylène polaire qui contient de 5 à 50% en poids de comonomères contenant de l'oxygène, incorporés par polymérisation.

6. Procédé suivant la revendication 5, caractérisé en ce que l'on utilise un copolymère qui contient un ou plusieurs comonomères qui appartiennent au groupe suivant: acides (méth)acryliques, esters des acides (méth)acryliques d'alcools qui contiennent de 1 à 8 atomes de carbone, poly[monoesters d'acides (méth)acryliques d'éthylèneglycol] comportant de 1 à 12 unités oxyde d'éthylène dans la molécule, acide maléique, anhydride maléique, acide fumarique, acide itaconique, acide crotonique, esters ou des hémiesters des acides précités avec des alcools qui comportent de 1 à 8 atomes de carbone, acétate de vinyle, propionate de vinyle, où les radicaux carboxyle sont neutralisés à raison de 0 à 40% par formation de sel.

7. Procédé suivant la revendication 5, caractérisé en ce que l'on utilise un copolymère qui contient un ou plusieurs monomères appartenant au groupe suivant: acides (méth)acryliques, anhydride maléique, (méth)acrylates de méthyle, (méth)acrylates d'éthylhexyle, acrylate de n-butyle, acrylate de tert-butyle, méthacrylate de glycidyle.

8. Utilisation des copolymères de l'éthylène chargés et fabriqués suivant l'une quelconque des revendications 1 à 7, à titre de matériau d'emballage.

9. Utilisation des copolymères de l'éthylène chargés et fabriqués suivant l'une quelconque des revendications 1 à 7, à titre de feuilles, de feuilles rétractables, de récipients, de sacs à provisions, de sacs à ordures.

10. Utilisation des copolymères de l'éthylène chargés et fabriqués suivant l'une quelconque des revendications 1 à 7 dans l'agriculture et l'horticulture ou la culture fruitière, à titre de feuille servant de paillis et de distributeurs de phéromones.

11. Utilisation des copolymères de l'éthylène chargés et fabriqués suivant l'une quelconque des revendications 1 à 7, à titre de supports et de sources de carbone pour des bactéries destinées à la dénitrification lors du traitement de l'eau.
